# EUROPEAN PATENT SPECIFICATION

(11) **EP 3 349 999 B1**
(45) Date of publication and mention of the grant of the patent: **04.09.2019**
(21) Application number: 16763879.0
(22) Date of filing: 14.09.2016
(51) Int. Cl.: B60H 1/00, B60H 1/24, F24F 12/00

(54) **AIR CONDITIONING SYSTEM**
KLIMATISIERUNGSSYSTEM
SYSTÈME DE CLIMATISATION

(30) Priority: 17.09.2015 GB 201516458
(43) Date of publication of application: 25.07.2018
(73) Proprietor: Jaguar Land Rover Limited, Coventry, Warwickshire CV3 4LF (GB)
(72) Inventor: BELOE, Neil, Coventry Warwickshire CV3 4LF (GB)
(74) Representative: Westcott, Matthew John George
(86) International application number: PCT/EP2016/071665
(87) International publication number: WO 2017/046146

(56) References cited:
- EP-A1- 2 202 106
- WO-A1-2014/160459
- DE-C1- 19 847 504
- FR-A1- 2 976 853
- US-A1- 2002 197 949
- US-A1- 2004 152 408
- US-A1- 2006 229 009
- US-B1- 6 758 739

## Description

### TECHNICAL FIELD

The invention relates to an air conditioning system for a vehicle, particularly but not exclusively, a land vehicle. Aspects of the invention relate to an air conditioning system for a vehicle, a vehicle, and a method of conditioning air of a vehicle cabin.

### BACKGROUND

A land vehicle, such as a car or the like, has an outer shell including a body and various doors and windows. The shell separates a vehicle exterior from a cabin interior. When the windows and doors are shut, the shell hermetically seals the cabin interior from the vehicle exterior. In order to maintain a desirable air quality and temperature, the vehicle includes an air conditioning system.

A typical air conditioning system includes an inlet duct and an outlet duct. The inlet duct has an inlet situated at a front end of the vehicle and an outlet duct having an outlet situated at a rear end of the vehicle. Due to the front of the vehicle having a higher dynamic pressure than the rear when the vehicle is being driven, a through flow of air exists through the cabin of the vehicle.

The air conditioning system may include air quality sensors for determining cabin air quality and exterior air quality. In particular, the air quality sensors may be CO₂ sensors. In addition, one or more doors or valves may be provided to control the through flow of air. In this way, the CO₂ inside the cabin can be maintained to an acceptable level by opening and closing the doors based on the interior and exterior air quality.

However, introducing exterior air into the cabin can have adverse effects on other vehicle systems such as the battery, particularly in an electric or hybrid electric vehicle. For instance, the air being introduced to address high levels of cabin CO₂ may be introducing extremely hot or cold air into the cabin, which air would require energy to control its temperature to an acceptable level.

Examples of such air-conditioning systems are disclosed in: DE19847504, US6758739 & WO2014160459.

It is an object of the present invention to address disadvantages associated with the prior art.

### SUMMARY OF THE INVENTION

Aspects and embodiments of the invention provide an air conditioning system for a vehicle, a vehicle, and a method of conditioning air of a vehicle cabin as claimed in the appended claims.

According to an aspect of the present invention there is provided an air conditioning system for a cabin of a vehicle, the air conditioning system comprising; one or more interior sensors for determining an interior air quality and an interior air temperature; one or more exterior sensors for determining an exterior air quality and an exterior air temperature; an inlet duct and an outlet duct for permitting an air flow between a vehicle exterior and a cabin interior; an air flow regulating device for controlling an air flow through the inlet and outlet ducts; an energy reclamation heat exchanger for reclaiming thermal energy between the inlet duct and the outlet duct; and a control module arranged to determine a desired air influx based on the interior and exterior air qualities to obtain a resultant cabin air having a predetermined air quality, determine an energy cost associated with a heat exchanger in obtaining a predetermined temperature of the resultant cabin air, determine an actual air influx based on the desired air influx and the energy cost, and configure the air flow regulating device to induce the actual air influx.

Basing the actual air influx on both the desired air influx and the energy cost helps to manage energy consumption in heating and/or cooling, when conditioning the cabin air.

In an embodiment, the one or more sensors are selected from a list including a CO₂ sensor, a humidity sensor, a CO sensor, and NOx sensor and a seat occupancy sensor. CO₂ and humidity are present in both interior air and exterior air in varying quantities. In the cabin interior, these parameters are particularly important to monitor since they may result from presence of vehicle occupants. CO is more relevant to exterior air quality, for instance when the vehicle is substantially stationary in a traffic jam in an urban environment. For interior air quality, seat occupancy can help in modelling parameters such as CO₂, humidity, and even temperature based on the number of occupants within the vehicle.

In an embodiment, the predetermined air quality is within an air quality range.

In an alternative embodiment, the predetermined air quality is a set point value.

In an embodiment, the range is between about 500 ppm and about 1500 ppm CO2.

In an embodiment, the set point value is about 750 ppm CO2.

In an embodiment, the range is between about 20% and about 40% humidity.

In an embodiment, the set point value is about 30% humidity.

According to the invention, the air conditioning system comprises an energy reclamation heat exchanger for reclaiming thermal energy between the inlet duct and the outlet duct. Reclaiming thermal energy between the inlet duct and the outlet duct is efficient since such reclaiming harnesses thermal energy difference between the inlet and outlet ducts. In this way, a reduction of the thermal energy demand from any heat exchangers used for actively heating or cooling the cabin air can be achieved.

In an embodiment, the energy reclamation heat exchanger comprises a passive heat exchange element. A passive heat exchange element is generally most energy efficient since it requires no active energy to operate.

In an embodiment, the inlet duct is centrically arranged with the outlet duct and the passive heat exchange element includes the inlet duct or the outlet duct as a common structural interface between inlet and outlet flows. By centrically is intended one duct is located within the other duct. In this way, the inlet or outlet duct acts as a thermally conductive common structural interface providing thermal energy transfer thereacross.

In an embodiment, the inlet duct and the outlet duct are concentrically arranged. By concentrically arranging the pipes, the common structural boundary between the inlet and outlet ducts is provided by one of the pipes of the inlet or outlet ducts. Arranging the ducts in this way means that the structure of the inner pipe is the common structural interface that divides the two ducts. Such an arrangement maximises the contact area between the ducts leading to increased thermal energy conduction and thus even further thermal efficiencies.

In an alternative embodiment, the inlet duct and the outlet duct are eccentrically arranged. Arranging the pipes in this way provides many of the benefits afforded by the concentric arrangement. In addition, the off-centre pipes increase the amount of flow disturbance of the air flowing through the ventilation system.

In an embodiment, the passive heat exchange element comprises mechanical fixtures, said mechanical fixtures selected from a list including one or more of: fins, ribs, pins, dimples, and grooves. The mechanical fixtures increase the surface area contacting the flow in order to improve the transfer of thermal energy from one air flow to the other. In addition, such mechanical fixing may also serve a secondary purpose of locating and stabilising the ducting.

In an embodiment, the energy reclamation heat exchanger comprises an active heat exchange element.

In an embodiment, the active heat exchange element comprises a Peltier cell. The Peltier cell promotes heat transfer between the two flows more effectively than passive heat exchange elements.

In an embodiment, a source port of the inlet duct and an exhaust port of the outlet duct are located at the vehicle exterior, an exhaust port of the inlet duct and a source port of the outlet duct are located at the cabin interior, and wherein the source port of the inlet duct and the exhaust port of the outlet duct are located in a zone of substantially equivalent dynamic pressure, in-use, and wherein the air flow regulating device comprises an air propulsion element for inducing an airflow between the inlet and outlet ducts. In this way, the default setting is for zero flow through the air conditioning system such that no air can enter the cabin unless induced by the air propulsion element.

In an embodiment, the energy cost is determined using a predefined energy cost model based on a battery state of charge and a desired air influx. In addition, the energy cost model may also be based on energy required by the air flow regulating device and energy required by the reclamation heat exchanger. The energy cost may be continuously and dynamically calculated to optimize efficiency.

In an embodiment, control module comprises a reinforcing module to update the energy cost model in-use based on actual energy usage of the air conditioning system in obtaining the predetermined interior cabin temperature, i.e. the predetermined temperature of the resultant cabin air. By reinforcing the energy cost model, predicting the energy usage of the air conditioning system will be more accurate.

In an embodiment, the air conditioning system comprises a recirculating system, the recirculating system comprising a recirculating duct and a heat exchanger, the recirculating duct arranged to recirculate interior cabin air through said heat exchanger.

In a further aspect of the present invention there is provided a vehicle comprising a cabin and the aforementioned air conditioning system for ventilating the cabin, in-use.

According to a further aspect of the present invention there is provided a method of conditioning air of a vehicle cabin, the method comprising;
determining an interior air quality, and exterior air quality, an interior air temperature, and an exterior air temperature;
determining a desired air influx based on the interior and exterior air qualities influx to obtain a predetermined interior cabin air quality;
determining an energy cost associated with a heat exchanger to obtain a predetermined interior cabin air temperature;
reclaiming energy between an inlet duct and an outlet duct with the heat exchanger;
determining an actual air influx based on the desired air influx and the energy cost; and
inducing the actual air influx into the cabin.

Within the scope of this application it is expressly intended that the various aspects, embodiments, examples and alternatives set out in the preceding paragraphs, in the claims and/or in the following description and drawings.

### BRIEF DESCRIPTION OF THE DRAWINGS

One or more embodiments of the invention will now be described, by way of example only, with reference to the accompanying drawings, in which:
Figure 1 shows a vehicle comprising an air conditioning system according to an embodiment of the present invention;
Figure 2 shows a schematic of the air conditioning system comprised in the vehicle of Figure 1;
Figure 3 shows a detailed section view of an inlet duct and an outlet duct comprised in the air conditioning system of Figure 2;
Figure 4 shows a flow chart of a method of conditioning a vehicle according to an embodiment of the present invention; and
Figure 5 shows a further flow chart illustrating the steps comprised in the cost calculation step comprised in the method of Figure 4.

### DETAILED DESCRIPTION

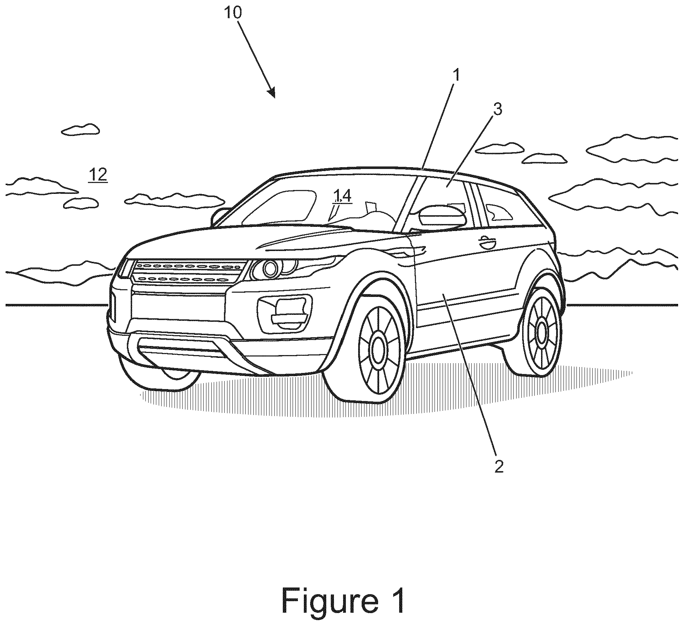

With reference to Figure 1, a vehicle 10 includes a body 1 supporting a plurality of doors 2 and windows 3. The vehicle 10 defines a vehicle exterior 12 and a cabin interior 14. The body 1 of the vehicle is substantially hermetically sealed unless the doors 2 and/or windows 3 are open. When the vehicle 10 is stationary, the exterior of the vehicle 12 is at a substantially constant pressure. This of course is subject to factors such as local wind speeds and temperature variations around the vehicle 10. However, to all intents and purposes the pressure around the vehicle exterior 12 is substantially constant.

Whilst the vehicle 10 is in motion, pressure variations are generated around an exterior surface of the vehicle 10. These changes in pressure are due to dynamic effects. For instance, local air velocities around the exterior surface of the vehicle 10 change due to differences in shape and contours thereof. An increase in local velocity can result in a decrease in local pressure. A decrease in velocity can result in an increase in local pressure. Other effects such as ram-air also have an impact on the pressure at the exterior surface of the vehicle 10, again causing local changes and variations in pressure.

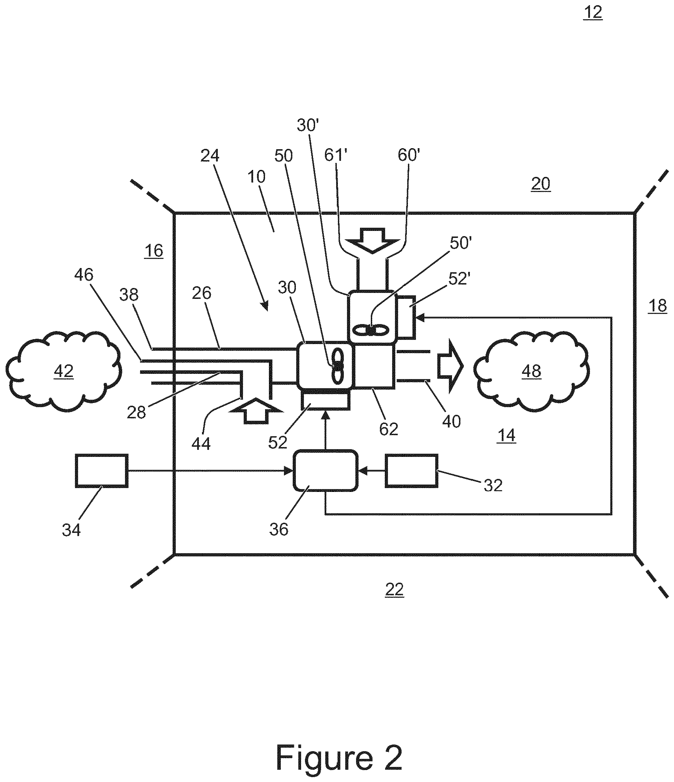

With reference to Figure 2, the vehicle 10 can be imagined as having a plurality of dynamic pressure zones, where the pressure across a particular zone is substantially constant. The pressure at the front of the vehicle 10 would be substantially constant and at a higher pressure than experienced at the rear of the vehicle 10, which is also a zone of substantially constant dynamic pressure. In addition, a top side of the vehicle 10 may have substantially constant pressure thereacross which would be at a different pressure to an underside of the vehicle 10. In this way, the vehicle exterior 12 can be imagined as having four different pressure zones: a front pressure zone 16; a rear pressure zone 18; an upper pressure zone 20; and a lower pressure zone 22. As described above, these zones 16-22 may experience different dynamic pressures to one another during motion of the vehicle.

The vehicle 10 includes an air conditioning system 24. The air conditioning system 24 includes an inlet duct 26, an outlet duct 28, an air propulsion element 30, an interior sensor 32, an exterior sensor 34, and a control module 36. The air conditioning system 24 also includes a re-circulation duct 60', a re-circulated air propulsion element 30', and a primary heat exchanger 62.

The inlet duct 26 is a pipe. The inlet duct 26 includes a source port 38, and an exhaust port 40. The source port 38 and the exhaust port 40 are formed from pipe ends. The source port 38 is located in the front pressure zone 16. The exhaust port 40 of the inlet duct 26 is located within the cabin interior 14. The inlet duct 26 allows exterior air 42 to enter the cabin interior 14.

The outlet duct 28 is formed from an elbow pipe. One elongate section of the pipe is concentrically arranged with the pipe forming the inlet duct 26. In this way, the outlet duct 28 forms an interior pipe within the inlet duct 26, which forms an exterior pipe. The pipes may be arranged in different ways such as an eccentric arrangement for flow distribution reasons, if desired. However, for the concentric arrangement, a transverse section of the elbow pipe protrudes through a passage provided at a wall of the inlet duct 26. The transverse portion of the pipe terminates at a source port 44 located within the cabin interior 14. The other section of the pipe terminates at an exhaust port 46 located in the front pressure zone 16 at the vehicle exterior 12. The source port 44 and the exhaust port 46 are formed as pipe ends. The source port 38 of the inlet duct 26 and the exhaust port 46 of the outlet duct 28 are thus collocated in a zone of substantially equivalent dynamic pressure, namely the front dynamic pressure zone 16. These ports may be collocated at the front zone 16 as opposed to the rear zone 18 since the vehicle 10 has an engine exhaust (not shown) located at the rear of the vehicle 10. Thus, in a default setting, the likelihood of engine pollutants from the host vehicle entering the cabin interior 14 is mitigated.

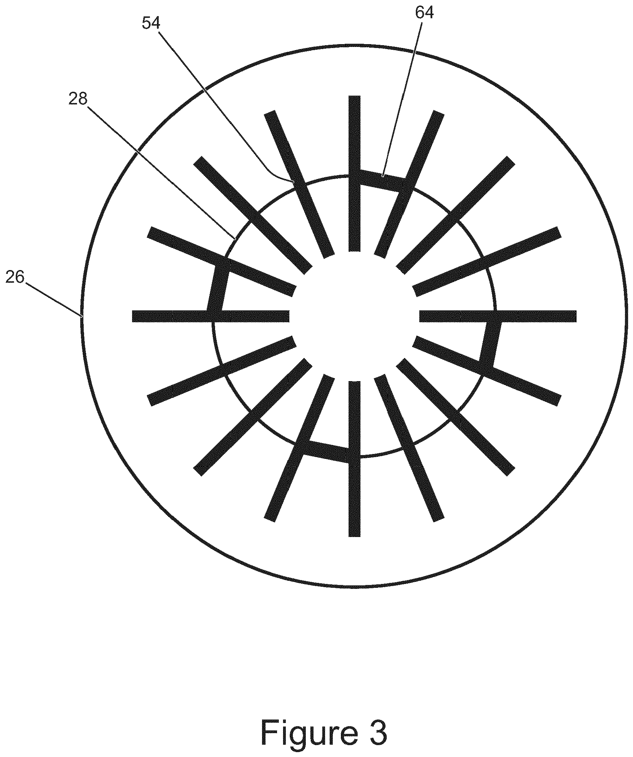

With reference to Figure 3, a cross sectional view of the concentrically arranged inlet 26 and outlet 28 ducts is shown. Arranged across the common structural interface, which joins the inlet and outlet ducts, are one or more mechanical fixtures, in the form of fins 54. The fins 54 increase the surface area of the common structural interface in order to conduct a larger amount of thermal energy from one air flow to the other. Accordingly, these fins 54 act as a reclamation, or secondary, heat exchanger. This is intended in a passive sense since no external energy is required to facilitate the heat exchange between inlet and outlet air flows. Of course, further mechanical fixtures may be used such as ribs, dimples, pins or grooves, which can be used as alternatives to each other or various combinations of each.

The fins 54 can be replaced by, or used in conjunction with, an active reclamation heat exchange element 64. One particular type of active heat exchange element 64 is in the form of a Peltier cell. A Peltier cell includes a plurality of p type semiconductors and a plurality of n type semi conductors, which semiconductor types are connected electrically in series and thermally in parallel. In response to an electric current being passed across the cell, the temperature at junctions between adjacent semiconductors changes, causing a temperature difference between opposing plates, either side of the semiconductor network, thus facilitating effective heat transfer between the plates.

With further reference to Figure 2, the air propulsion element 30 comprises a variable speed fan 50. The fan 50 is located within the inlet duct 26. The fan 50 is arranged to draw exterior air 42 in to the cabin interior 14. Alternatively, the variable speed fan 50 may be arranged to push interior air 48 from the cabin interior 14, to the exterior of the vehicle 12; and/or be located within the outlet duct 28.

The fan 50 is the only obstruction within the inlet and outlet ducts 26, 28, since each duct 26, 28 is door-less. The fan 50 is driven by a motor 52. The revolutions per minute (RPM) of the motor 52 are controlled by the control module 36. A high motor 52 speed results in a high rotational speed of the fan 50. A low motor 52 speed results in a low rotational speed of the fan 50. Fan speed is proportional to the flow rate of air being induced in to the cabin interior 14 from the vehicle exterior 12.

The recirculation duct 60' has a source port 61' located within the cabin and an exhaust port connected to the air propulsion element 30'. The air propulsion element 30' is similar in form to the air propulsion element 30, being a variable speed fan 50' driven by a motor 52' and controlled by the control module 36.

The primary heat exchanger 62 includes a refrigerant circuit for directing a refrigerant, such as R134a or HFO-1234yf between a condensing tube and fin construction and an evaporating tube and fin construction. The condensing tube and fin construction increases the pressure and density, leading to an increase in temperature of any impinging air flow, while the evaporating tube and fin construction reduces the density and pressure, leading to a reduction in temperature of any impinging air flow. A compressor is provided between the evaporating tube and fin construction and the condensing tube and fin construction for increasing the temperature of the refrigerant for entry into the condensing tube and fin construction. In addition, an expansion valve is provided between the condensing tube and fin construction and the evaporating tube and fin construction for reducing the pressure and temperature of the refrigerant for entry into the evaporating tube and fin construction. A pump is provided for pumping the refrigerant around the circuit. The heat pump cycle is a bi-directional cycle and so can transfer the heat energy in either direction according to the configuration of the refrigerant circuit, thus dictating the function of each tube and fin construction as either a condensing tube and fin construction or an evaporating tube and fin construction, depending on the configuration of flow of the refrigerant. In this way, only one tube and fin construction need be in the flow stream of impinging air and the pump can be controlled by the control module 36 to control whether the impinging air flow is heated or cooled.

The interior sensor 32 is arranged to monitor air quality within the cabin interior 14. The air quality parameters of particular interest include CO2, humidity, and temperature of the interior air of the cabin. The interior sensor 32 can thus be any one or more of a CO2 sensor, a humidity sensor, or a temperature sensor. In the current embodiment of Figure 2, the interior sensor 32 relates to more than one sensor, namely three sensors, each measuring one of CO2, humidity, and temperature.

In the current embodiment the CO₂ sensor is a non-dispersive infrared (NDIR) sensor. The NDIR sensor is a spectroscopic sensor. The spectroscopic sensor detects CO₂ in a gaseous environment, in this case the cabin interior 14, by the characteristic absorption of the gas (cabin air 48) which the NDIR sensor acts upon.

The humidity sensor may be a hygrometer. The hygrometer measures moisture content of the cabin air 48 indirectly by monitoring temperature of the dew point. An alternative hygrometer may be implemented which monitors changes in electrical capacitance or resistance in order to measure humidity differences. The exterior environment parameter sensor 34 may be a complementary environment parameter sensor in that it measures the same environment parameter as the interior environment parameter sensor 32. The exterior environment parameter sensor may be located at the vehicle exterior 12. It is advantageous to use the same type of sensor for measuring each respective environment parameter, for instance, the CO₂ sensors at the interior and exterior of the vehicle may both be NDIR sensors.

The temperature sensor may be a resistance temperature sensor having a resistive element exposed to the interior air of the cabin. The resistance of the resistive element is temperature sensitive.

In the present embodiment the exterior sensor 34 includes five sensors. These five sensors include a CO2 sensor, a humidity sensor, a temperature sensor as in the cabin, a nitrous oxide (NOx) sensor, and a carbon monoxide (CO) sensor.

The CO sensor may be an electrochemical instant detection and response (IDR) sensor. The IDR measures the CO content of the air at the vehicle exterior 42 indirectly by monitoring changes in electrical resistance through an electrochemical solution.

The NOx sensor may be a potentiometric sensor, which measures the potential difference between a working electrode and reference electrode. The working electrode's potential depends on the concentration of the NOx in the air of the vehicle exterior 42.

The interior and exterior sensors 32, 34 are connected to the control module 36. The control module 36 may be provided as electronic data stored on a memory component of a computer of the vehicle 10. The memory component may be a nonvolatile memory component. The computer may also include a processor arranged to execute the electronic data of the control module 36, in use. Output of the control module 36 configures the motor 52 to control the speed of the fan 50.

The control module 36 may include a look-up table such that a predetermined flow rate of air from the cabin exterior 12 is induced into the cabin interior 14, which flow rate is a function of those aforementioned parameters sensed both at the cabin interior 14 and the vehicle exterior 12. More detail on the selection of actual flow rate is included below.

The level of each environment parameter within the cabin interior 14 is arranged to be kept within predefined limits. For CO₂, the predefined limits are between about 500ppm and about 1500ppm CO₂. For humidity levels, the predefined limits are between about 20% and about 40%. As an alternative to using predefined limits, it is possible to maintain a set point value of the parameters within the cabin interior 14. A set point value for CO₂ would be 750 ppm and a set point value for humidity would be 30% humidity.

In operation, and with reference to Figure 2, the vehicle 10 moves through the exterior air 42 during travel. Movement of the vehicle 10 creates the different pressure zones around the vehicle exterior 12. In particular, the front pressure zone 16 is created which is a zone of relatively high dynamic pressure. In addition, the rear pressure zone 18 is created which is a zone of relatively low dynamic pressure. Since the source port 38 of the inlet duct 26 and the exhaust port 46 of the outlet duct 28 are collocated in a zone of substantially equivalent dynamic pressure, there is minimal passive air flowing through the air conditioning system 24. Interior air 48 is circulated within the cabin interior 14 for air conditioning purposes, using the recirculating duct 60', where the cabin air is driven by the fan 50'.

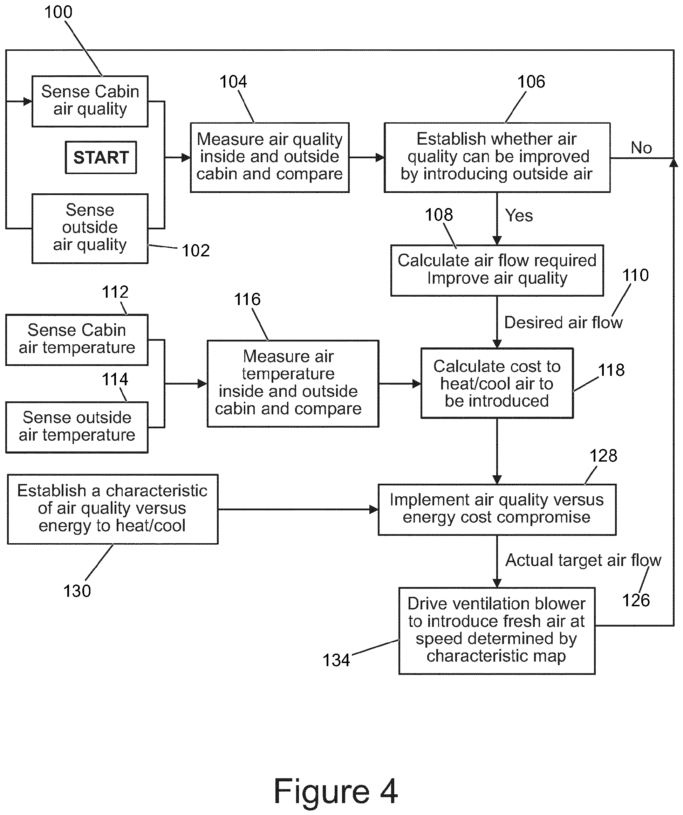

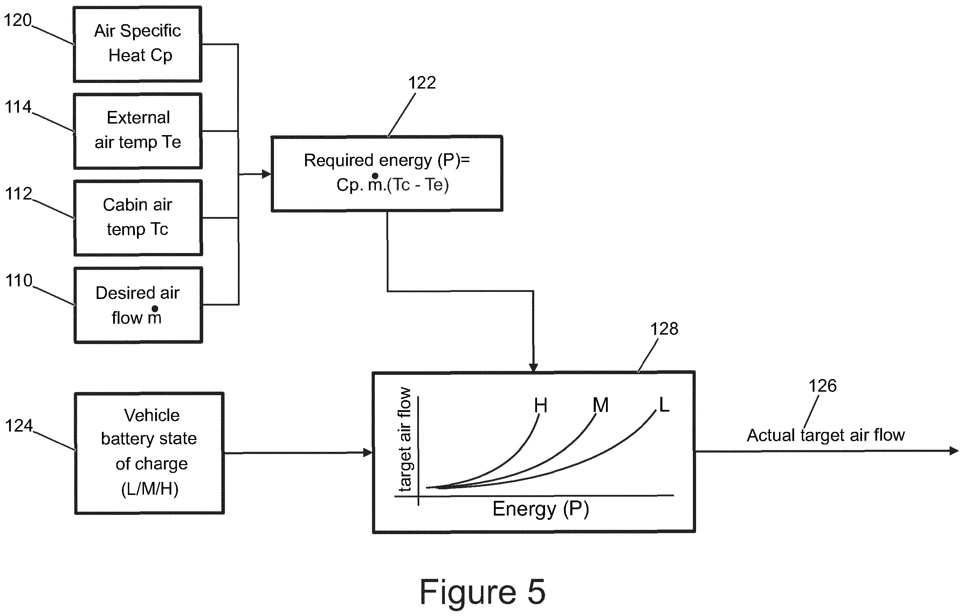

However in other circumstances, it may be desirable to induce exterior air into the cabin to maintain the cabin air at an acceptable quality. Figures 4 and 5 show flow diagrams of a method implemented by the control module 36 in deciding on whether to induce air in to the cabin, and how much air may be required.

With reference to Figure 4 and Figure 2, the control methodology starts by the interior sensors 32 monitoring CO₂ and humidity levels within the cabin 14, as shown at step 100. Simultaneously, the exterior sensors 34 also monitor CO₂ and humidity levels of the exterior air, as well as the CO and NOx levels, at step 102. The sensors 32, 34, are configured to continuously monitor the interior and exterior air quality, thus steps 100 and 102 are continuously repeated.

At step 104, the control module 36 compares the interior air quality with the exterior air quality. This comparison is achieved by a numerical subtraction of the exterior air quality from the interior air quality. At step 106, the control module establishes whether or not the interior air quality could be improved by inducing exterior air into the cabin through the air conditioning system. For instance, if the CO₂ level of the exterior air is greater (for instance, measured in parts per million, ppm) than that of the interior air, thus leading to a negative number when the two levels are compared, the control module determines that the interior air quality cannot be improved and reverts back to steps 100 and 102. However, if the exterior air quality is better, namely that the CO₂ level of the exterior air is of a lower ppm than that of the interior air, then the control module will have established that the interior air quality can be improved by inducing an influx of exterior air into the cabin through the air conditioning system. In this event, the control module will proceed to step 108.

It should be noted that establishing whether air quality can be improved at step 106 is not limited to a mere comparison of like variables or parameters. For instance, humidity is also a common parameter which is measured at the interior and exterior. Accordingly, a subtraction of the exterior air quality from the interior air quality is used to determine if humidity can be improved by an influx of exterior air into the cabin. However, CO and NOx may instead use absolute threshold values as opposed to a comparison as determined at step 104, since typically there would be such low levels of CO and NOx in the cabin that the presence of any of those gases externally could eliminate the use of the air conditioning system. Therefore, it is more appropriate to use absolute threshold values of CO and NOx to allow or reject an influx of exterior air into the cabin.

At step 108 a look up table is used in order to determine a flow rate, *ṁ*, that may be required in order to improve the air quality within the cabin to an acceptable level. The flow rate, *ṁ,* is a desired flow rate since it may or may not be possible to produce the desired flow rate 110 depending on other factors such as battery state of charge, as described below.

In parallel to the aforementioned sensing of air qualities, the interior air temperature is monitored at step 112, and the exterior air temperature is monitored at step 114. At step 116, the exterior air temperature is compared with the interior air temperature by a subtraction of the exterior air temperature from the interior air temperature.

At step 118 a cost associated with the heat exchanger 62 (Figure 2) in heating or cooling the resultant air of the cabin is calculated - in particular, the cost associated with the heating or cooling of the air to be introduced into the cabin to achieve the targeted improvement in interior air quality is calculated. By resultant cabin air, is intended the cabin air after the desired quantity of exterior air has been brought into the cabin by the air conditioning system. Steps 118 and 120 are shown in greater detail in Figure 5.

With reference to Figure 5, the control module 36 loads various parameters from the memory of the computer. In particular, the control module 36 loads the specific heat capacity of air, Cₚ, at step 120, the exterior air temperature at step 114, the interior air temperature at step 112, and the desired mass flow rate of air, *ṁ* at step 110. The required energy from the heat exchanger to heat or cool the incoming air is calculated, at step 122. The calculation of required energy, P, is achieved using the formula *P* = *Cₚṁ*(*T_{C}* - *Tₑ*).

Next, the control module 36 determines the battery state of charge. In this embodiment, the battery state of charge is determined as being either high, H, medium, M, or low, L. Such information is readily available from various systems throughout the vehicle. Obtaining the battery state of charge is shown representational, at step 124.

The control module 36 then converts the desired flow rate obtained at step 110 to an actual flow rate 126 by comparing the energy required to heat or cool the induced air to the state of charge of the battery. This is shown at step 128. In particular, the control module 36 includes a set of data curves for actual air flow 126 against the energy cost, P. Each curve is shown for a particular battery state of charge. Using the battery state of charge and required energy, the actual flow rate of air 126 is determined. It should be noted that a lower actual flow rate 126 is selected for low battery state of charge, since using a lower flow rate will require less energy and reduce the actual energy consumed. However, the reduced rate of introduction of external air will mean that the air quality will balance/settle at a higher value in the acceptable range. The characteristics, in step 128, however, will allow a higher flow but at a much higher level of demand than that required when the battery is at a high state of charge.

Step 128 is also shown in Figure 4, which describes the implementation of air quality versus energy cost compromise. At step 130, a characteristic of air quality versus energy to heat/cool the air coming into the cabin is established. This characteristic is used in step 128. The characteristic in this case includes the set of curved shown at step 128 in Figure 5, which curves are determined through theoretical or empirical analysis offline prior to installing the control module to the vehicle.

Alternatively, the characteristic of air quality versus energy to heat/cool the incoming air can be established in real time. This can be achieved in various ways, for instance by a machine learning algorithm which is provided as part of the control module to monitor the interior air over time using the interior sensors. In this way, the actual behaviour of the air conditioning system can be monitored which may change for instance as the air conditioning system ages in use.

Step 126, relating to the actual air flow, is also shown on Figure 4 as an output from the energy cost compromise. The actual air flow 126 may be the same flow rate of air as the desired air flow 110, although in practice these two values are likely to differ. Using the actual flow rate obtained at step 126, the control module, at step 134, uses a look-up table to drive the fan 50 (Figure 2) to induce a flow rate of exterior air into the cabin.

It is beneficial to take into account energy consumption since the battery may have insufficient energy to cope with the heating or cooling demand. This is particularly the case where large temperature differences exist between the interior and exterior air and a large quantity of exterior air is required to address the interior air quality issue

The induced air flow passes the heat exchanger 62. As discussed above, the heat exchanger in this embodiment has a bi-directional pump which is able to pump the refrigerant in either direction. Accordingly, the influx of air need only pass over one coil of the heat exchanger. In this way, with the refrigerant flowing in a first direction, the coil acts as a condensing coil in order to heat the incoming air. In a second pumping direction, the coil acts as an evaporator coil in order to cool the incoming air. The induced air is thus at a temperature which matches the current, or desired, interior air temperature within the cabin. In this way, the resultant interior air temperature and quality will be at desirable levels. It will be appreciated that other known arrangements of heat exchanger are possible.

In some instances, the exterior and interior air temperatures may differ to an extent where the heat exchanger cannot heat or cool the air at a rate sufficient to match the interior air temperature. In these cases, the recirculation fan 50' is controlled by the control module 36 (Figure 2) to induce a recirculating flow rate of air through the recirculation duct 60. Like with incoming air, this recirculated flow of air is directed over the heat exchanger 62 to heat or cool the recirculated air flow.

It should be noted that this 'recirculating' mode of operation is also taken into account when establishing the characteristic of air quality versus energy to heat/cool the air at step 130 of Figure 4. In a similar way, step 134 may also be used to drive the fan 50' in the event that the recirculating mode is deemed by the control module 36 to be necessary for obtaining a desired resultant interior air temperature.

Air entering the cabin 14 causes interior cabin air 48 to displace to the exterior 16 of the vehicle 10 through the outlet duct 28. In doing so, the exhaust cabin air transfers thermal energy to the incoming air by the common structural interface provided by the outlet duct 28 being concentrically arranged inside the inlet duct 26. The thermal energy transfer between exhaust cabin air and incoming air is enhanced by the structural fixtures 54 (Figure 3). In this way, these structural fixtures 54, or even Peltier cells 64, where used, can aid in reclaiming thermal energy from the exhaust cabin air to reduce the energy consumption of the heat exchanger 62. Such energy transfer between flows is also incorporated into the cost calculation to heat/cool air to be introduced, at step 122 (Figure 5).

In addition to monitoring interior air quality, the action of sensing interior cabin air quality, at step 100 (Figure 4), may include modelling an estimation of future humidity and CO₂ levels by using a seat occupancy sensor, and modelling an estimation of oxygen consumption, and the thermal impact associated with a detected number of occupants within the vehicle. Such information can be used in addition to, or as an alternative to, using the CO₂ and humidity sensors inside the cabin 14.

It should be noted that the air propulsion element 30 is, in certain embodiments an air regulating device, since the fan 50 regulates an air flow rate through the air conditioning system 24. The air regulating device could take other forms should a different configuration of inlet and outlet ducts be implemented. For instance, an inlet duct with a source port at the front of the vehicle and an outlet duct with an exhaust port at the rear of the vehicle would naturally have a through flow of air through the cabin during driving. In this way, a regulating device in the form of a valve could be used and controlled by the control module 36 to induce an air flow into the cabin 14 instead of using the fan 50.

Alternative modes of operation are envisaged which are not described here, but which the skilled person would understand as falling within the scope of the appended claims. In this regard, the aforementioned description should be considered as only providing a non-exhaustive set of illustrative embodiments.

## Claims

1. An air conditioning system for a cabin of a vehicle (10), the air conditioning system comprising; one or more interior sensors (32) for determining an interior air quality and an interior air temperature; one or more exterior sensors (34) for determining an exterior air quality and an exterior air temperature; an inlet duct (26) and an outlet duct (28) for permitting an air flow between a vehicle exterior (12) and a cabin interior (14); an air flow regulating device for controlling an air flow through the inlet and outlet ducts (26), (28); an energy reclamation heat exchanger (62) for reclaiming thermal energy between the inlet duct (26) and the outlet duct (28) and a control module (36) arranged to determine a desired air influx based on the interior and exterior air qualities to obtain a resultant cabin air having a predetermined air quality, **characterised in that**, the control module (36) is arranged to determine an energy cost associated with the energy reclamation heat exchanger (62) in obtaining a predetermined temperature of the resultant cabin air, determine an actual air influx based on the desired air influx and the energy cost, and configure the air flow regulating device to induce the actual air influx.

2. The air conditioning system of Claim 1, wherein the one or more interior and exterior sensors (32), (34) are selected from a list including a CO2 sensor, a humidity sensor, a CO sensor, an NOx sensor and a seat occupancy sensor.

3. The air conditioning system of Claim 1 or Claim 2, wherein the predetermined air quality is within an air quality range and wherein, optionally, the range is between about 500ppm and about 1500ppm CO2.

4. The air conditioning system of Claim 1 or Claim 2, wherein the predetermined air quality is a set point value and wherein, optionally, the set point value is about 750 ppm CO2.

5. The air conditioning system of Claim 2, wherein the predetermined air quality is within an air quality range, and the range is between about 20% and about 40% humidity.

6. The air conditioning system of Claim 2, wherein the predetermined air quality is a set point value, and the set point value is about 30% humidity.

7. The air conditioning system of any preceding claim, wherein the energy reclamation heat exchanger (62) comprises a passive heat exchange element.

8. The air conditioning system of Claim 7, wherein the inlet duct (26) is centrically arranged with the outlet duct (28) and the passive heat exchange element includes the inlet duct (26) or the outlet duct (28) as a common structural interface between inlet and outlet flows.

9. The air conditioning system of Claim 8, wherein the inlet duct (26) and the outlet duct (28) are concentrically arranged or wherein the inlet duct (26) and the outlet duct (28) are eccentrically arranged.

10. The air conditioning system of any of any preceding claim, wherein the energy reclamation heat exchanger (62) comprises an active heat exchange element (64).

11. The air conditioning system of any preceding claim, wherein a source port (44) of the inlet duct (26) and an exhaust port (46) of the outlet duct (28) are located at the vehicle exterior, an exhaust port (40) of the inlet duct (26) and a source port (44) of the outlet duct (28) are located at the cabin interior, and wherein the source port (38) of the inlet duct (26) and the exhaust port (46) of the outlet duct (28) are located in a zone of substantially equivalent dynamic pressure, in-use, and wherein the air flow regulating device comprises an air propulsion element (30) for inducing an airflow between the inlet and outlet ducts (26), (28).

12. The air conditioning system of any preceding claim, wherein the energy cost is determined using a predefined energy cost model based on a battery state of charge and a desired air influx.

13. The air conditioning system of any preceding claim, comprising a recirculating system, the recirculating system comprising a recirculating duct (60') and a heat exchanger (62), the recirculating duct (60') arranged to recirculate interior cabin air through said heat exchanger (62).

14. A vehicle (10) comprising a cabin and the air conditioning system of any preceding claim for ventilating the cabin.

15. A method of conditioning air of a vehicle cabin, the method comprising:
determining an interior air quality, an exterior air quality, an interior air temperature, and an exterior air temperature;
determining a desired air influx based on the interior and exterior air qualities influx to obtain a predetermined interior cabin air quality;
determining an energy cost associated with an energy reclamation heat exchanger (62) to obtain a predetermined interior cabin air temperature;
reclaiming energy between an inlet duct (26) and an outlet duct (28) with the energy reclamation heat exchanger (62);
determining an actual air influx based on the desired air influx and the energy cost; and
inducing the actual air influx to the cabin.

## Patentansprüche

1. Klimaanlage für eine Kabine eines Fahrzeugs (10), wobei die Klimaanlage umfasst; einen oder mehrere Innenraumsensoren (32) zum Bestimmen einer Innenraumluftqualität und einer Innenraumlufttemperatur; einen oder mehrere Außensensoren (34) zum Bestimmen einer Außenluftqualität und einer Außenlufttemperatur; einen Einlasskanal (26) und einen Auslasskanal (28) zum Ermöglichen eines Luftstroms zwischen einem Fahrzeugäußeren (12) und einem Innenraum (14) der Kabine; eine Luftstromregelungsvorrichtung zum Steuern eines Luftstroms durch die Einlass- und Auslasskanäle (26), (28); einen Energierückgewinnungswärmetauscher (62) zum Rückgewinnen von Wärmeenergie zwischen dem Einlasskanal (26) und dem Auslasskanal (28) und ein Steuermodul (36), das ausgelegt ist, um einen gewünschten Luftzufluss basierend auf den Innenraum- und Außenluftqualitäten zu bestimmen, um eine resultierende Kabinenluft mit einer vorbestimmten Luftqualität zu erhalten, **dadurch gekennzeichnet, dass** das Steuermodul (36) ausgelegt ist, um Energiekosten zu bestimmen, die mit dem Energierückgewinnungswärmetauscher (62) verbunden sind, wenn eine vorbestimmte Temperatur der resultierenden Kabinenluft erhalten wird, einen tatsächlichen Lufteintritt basierend auf dem gewünschten Lufteintritt und den Energiekosten zu bestimmen und die Luftstromregelungsvorrichtung zu konfigurieren, um den tatsächlichen Lufteintritt zu induzieren.

2. Klimaanlage nach Anspruch 1, wobei der eine oder die mehreren Innenraum- und Außensensoren (32), (34) aus einer Liste ausgewählt sind, die einen CO2-Sensor, einen Feuchtigkeitssensor, einen CO-Sensor, einen NOx-Sensor und einen Sitzbelegungssensor beinhaltet.

3. Klimaanlage nach Anspruch 1 oder Anspruch 2, wobei die vorbestimmte Luftqualität innerhalb eines Luftqualitätsbereiches liegt und wobei wahlweise der Bereich zwischen etwa 500 ppm und etwa 1500 ppm CO2 liegt.

4. Klimaanlage nach Anspruch 1 oder Anspruch 2, wobei die vorbestimmte Luftqualität ein Sollwert ist und wobei wahlweise der Sollwert etwa 750 ppm CO2 beträgt.

5. Klimaanlage nach Anspruch 2, wobei die vorbestimmte Luftqualität innerhalb eines Luftqualitätsbereiches liegt und der Bereich zwischen etwa 20 % und etwa 40 % Feuchtigkeit liegt.

6. Klimaanlage nach Anspruch 2, wobei die vorbestimmte Luftqualität ein Sollwert ist und der Sollwert bei etwa 30 % Feuchtigkeit liegt.

7. Klimaanlage nach einem vorhergehenden Anspruch, wobei der Energierückgewinnungswärmetauscher (62) ein passives Wärmeaustauschelement umfasst.

8. Klimaanlage nach Anspruch 7, wobei der Einlasskanal (26) zentrisch mit dem Auslasskanal (28) angeordnet und das passive Wärmeaustauschelement den Einlasskanal (26) oder den Auslasskanal (28) als eine gemeinsame strukturelle Schnittstelle zwischen Einlass- und Auslassströmen umfasst.

9. Klimaanlage nach Anspruch 8, wobei der Einlasskanal (26) und der Auslasskanal (28) konzentrisch angeordnet sind oder wobei der Einlasskanal (26) und der Auslasskanal (28) exzentrisch angeordnet sind.

10. Klimaanlage nach einem der vorhergehenden Ansprüche, wobei der Energierückgewinnungswärmetauscher (62) ein aktives Wärmeaustauschelement (64) aufweist.

11. Klimaanlage nach einem der vorhergehenden Ansprüche, wobei eine Quellöffnung (44) des Einlasskanals (26) und eine Ausströmöffnung (46) des Auslasskanals (28) an der Fahrzeugaußenseite angeordnet sind, eine Ausströmöffnung (40) des Einlasskanals (26) und eine Quellöffnung (44) des Auslasskanals (28) sich im Innenraum der Kabine befinden und wobei sich die Quellöffnung (38) des Einlasskanals (26) und die Ausströmöffnung (46) des Auslasskanals (28) in Gebrauch in einer Zone mit im Wesentlichen gleichem dynamischen Druck befinden und wobei die Luftstromregelungsvorrichtung ein Luftantriebselement (30) zum Induzieren eines Luftstroms zwischen dem Einlass- und dem Auslasskanal (26), (28) umfasst.

12. Klimaanlage nach einem der vorhergehenden Ansprüche, wobei die Energiekosten unter Verwendung eines vordefinierten Energiekostenmodells auf Basis eines Batterieladezustands und eines gewünschten Luftzuflusses bestimmt wird.

13. Klimaanlage nach einem der vorhergehenden Ansprüche, umfassend ein Umwälzsystem, wobei das Umwälzsystem einen Umwälzkanal (60') und einen Wärmetauscher (62) umfasst, wobei der Umwälzkanal (60') ausgelegt ist, um die Innenraumluft der Kabine durch den Wärmetauscher (62) umzuwälzen.

14. Fahrzeug (10), umfassend eine Kabine und die Klimaanlage nach einem der vorhergehenden Ansprüche zum Belüften der Kabine.

15. Verfahren zum Klimatisieren von Luft einer Fahrzeugkabine, wobei das Verfahren umfasst: Bestimmen einer Innenraumluftqualität, einer Außenluftqualität, einer Innenraumlufttemperatur und einer Außenlufttemperatur;
Bestimmen eines gewünschten Luftzuflusses basierend auf dem Zufluss der Innen- und Außenluftqualitäten, um eine vorbestimmte Innenraumluftqualität der Kabine zu erhalten;
Bestimmen von Energiekosten, die mit einem Energierückgewinnungswärmetauscher (62) verbunden sind, um
eine vorbestimmte Innenraumlufttemperatur der Kabine zu erhalten;
Rückgewinnen von Energie zwischen einem Einlasskanal (26) und einem Auslasskanal (28) mit dem Energierückgewinnungswärmetauscher (62);
Bestimmen eines tatsächlichen Luftzuflusses basierend auf dem gewünschten Luftzufluss und den Energiekosten; und
Induzieren des tatsächlichen Luftzuflusses in die Kabine.

## Revendications

1. Système de climatisation pour une cabine d'un véhicule (10), le système de climatisation comprenant : un ou plusieurs capteurs intérieurs (32) permettant de déterminer une qualité d'air intérieur et une température d'air intérieur ; au moins un capteur extérieur (34) permettant de déterminer une qualité d'air extérieur et une température d'air extérieur ; un conduit d'entrée (26) et un conduit de sortie (28) pour permettre un flux d'air entre un extérieur de véhicule(12) et un intérieur de cabine (14) ; un dispositif régulateur de flux d'air permettant de commander un flux d'air par les conduits d'entrée et de sortie (26), (28) ; un échangeur de chaleur à récupération d'énergie (62) permettant de récupérer l'énergie thermique entre le conduit d'entrée (26) et le conduit de sortie (28) et un module de commande (36) agencé afin de déterminer un afflux d'air souhaité en fonction des qualités de l'air intérieur et de l'air extérieur afin d'obtenir un air de cabine résultant ayant une qualité d'air prédéterminée, **caractérisé en ce que**, le module de commande (36) est agencé de manière à déterminer un cout de l'énergie associé à l'échangeur de chaleur récupération d'énergie (62) dans le but d'obtenir une température prédéterminée de l'air de cabine résultant, afin de déterminer un afflux d'air réel en fonction de l'afflux d'air souhaité et du cout de l'énergie, et de configurer le dispositif régulateur de flux d'air afin d'induire l'afflux d'air réel.

2. Système de climatisation selon la revendication 1, dans lequel les un ou plusieurs capteurs intérieurs et extérieurs (32), (34) sont choisis dans une liste comprenant un capteur de CO2, un capteur d'humidité, un capteur de CO, un capteur de NOx et un capteur d'occupation de siège.

3. Système de climatisation selon la revendication 1 ou la revendication 2, dans lequel la qualité de l'air prédéterminée se situe dans une plage de qualité de l'air et, éventuellement, la plage se situant entre environ 500 ppm et environ 1 500 ppm de CO2.

4. Système de climatisation selon la revendication 1 ou la revendication 2, dans lequel la qualité de l'air prédéterminée est une valeur de consigne et, éventuellement, la valeur de consigne étant d'environ 750 ppm de CO2.

5. Système de climatisation selon la revendication 2, dans lequel la qualité de l'air prédéterminée se situe dans une plage de qualité de l'air, et la plage étant comprise entre environ 20 % et environ 40 % d'humidité.

6. Système de climatisation selon la revendication 2, dans lequel la qualité de l'air prédéterminée est une valeur de consigne, et la valeur de consigne étant d'environ 30 % d'humidité.

7. Système de climatisation selon une quelconque revendication précédente, dans lequel l'échangeur de chaleur à récupération d'énergie (62) comprend un élément passif d'échange thermique.

8. Système de climatisation selon la revendication 7, dans lequel le conduit d'entrée (26) est disposé de manière centrale avec le conduit de sortie (28) et l'élément passif d'échange thermique comprend le conduit d'entrée (26) ou le conduit de sortie (28) comme interface structurelle commune entre les flux d'entrée et de sortie.

9. Système de climatisation selon la revendication 8, dans lequel le conduit d'entrée (26) et le conduit de sortie (28) sont disposés de manière concentrique et ou le conduit d'entrée (26) et le conduit de sortie (28) étant disposés de manière excentrique.

10. Système de climatisation selon une quelconque revendication précédente, dans lequel l'échangeur de chaleur à récupération d'énergie (62) comprend un élément actif d'échange thermique (64).

11. Système de climatisation selon une quelconque revendication précédente, dans lequel un orifice de source (44) du conduit d'entrée (26) et un orifice d'échappement (46) du conduit de sortie (28) sont situés à l'extérieur du véhicule, un orifice d'échappement (40) du conduit d'entrée (26) et un orifice de source (44) du conduit de sortie (28) étant situés à l'intérieur de la cabine et l'orifice de source (38) du conduit d'entrée (26) et l'orifice d'échappement (46) du conduit de sortie (28) étant situés dans une zone de pression dynamique sensiblement équivalente, lors de leur utilisation, et le dispositif de régulation du flux d'air comprenant un élément de propulsion d'air (30) permettant d'induire un flux d'air entre les conduits d'entrée et de sortie (26), (28).

12. Système de climatisation selon l'un quelconque revendication précédente, dans lequel le coût énergétique est déterminé à l'aide d'un modèle prédéfini de coût énergétique en fonction d'un état de charge de la batterie et d'un afflux d'air souhaité.

13. Système de climatisation selon une quelconque revendication précédente, comprenant un système de recirculation, le système de recirculation comprenant un conduit de recirculation (60') et un échangeur de chaleur (62), le conduit de recirculation (60') étant agencé afin de recirculer l'air intérieur de la cabine au moyen dudit échangeur de chaleur (62).

14. Véhicule (10) comprenant une cabine et le système de climatisation selon une quelconque revendication précédente permettant la ventilation de la cabine.

15. Procédé de conditionnement d'air d'une cabine de véhicule, le procédé comprenant : la détermination d'une qualité de l'air intérieur, d'une qualité de l'air extérieur, d'une température de l'air intérieur et d'une température de l'air extérieur ;
la détermination d'un afflux d'air souhaité en fonction de l'afflux des qualités de l'air intérieur et extérieur afin d'obtenir une qualité prédéterminée de l'air à l'intérieur de la cabine ;
la détermination d'un coût énergétique associé à un échangeur de chaleur à récupération d'énergie (62) afin d'obtenir
une température prédéterminée de l'air intérieur de la cabine ;
la récupération d'énergie entre un conduit d'entrée (26) et un conduit de sortie (28) avec l'échangeur de chaleur à récupération d'énergie (62) ;
la détermination d'un afflux d'air réel en fonction de l'afflux d'air souhaité et du coût énergétique ; et
l'induction de l'afflux d'air réel dans la cabine.
